# EUROPÄISCHE PATENTSCHRIFT

(11) **EP 2 071 589 B1**
(45) Veröffentlichungstag und Bekanntmachung des Hinweises auf die Patenterteilung: **14.05.2014**
(21) Anmeldenummer: 07291278.5
(22) Anmeldetag: 19.10.2007
(51) Int. Cl.: H01B 12/02

(54) **Supraleitfähiges elektrisches Kabel**
Superconducting electric cable
Câble électrique supraconducteur

(43) Veröffentlichungstag der Anmeldung: 17.06.2009
(73) Patentinhaber: Nexans, 75008 Paris (FR)
(72) Erfinder: Schmidt, Frank, Dipl.-Ing., 30855 Langenhagen (DE); Soika, Rainer, Dr., 30171 Hannover (DE)
(74) Vertreter: Döring, Roger

(56) Entgegenhaltungen:
- EP-A- 1 717 821
- US-A1- 2005 068 701

## Beschreibung

Die Erfindung bezieht sich auf ein supraleitfähiges elektrisches Kabel, das von einem Kryostat umgeben ist, der aus zwei konzentrischen, eine thermische Isolierung zwischen sich einschließenden metallischen Rohren besteht und zur Führung eines Kühlmediums dient, und das mindestens einen aus supraleitfähigem Material bestehenden Supraleiter sowie einen aus normalleitendem Material bestehenden elektrischen Normalleiter aufweist, der mit dem Supraleiter elektrisch leitend verbunden ist (EP 1 717 821 A1).

Ein supraleitfähiges Kabel hat mindestens einen elektrischen Leiter aus einem speziellen Material, das bei ausreichend tiefen Temperaturen in den supraleitfähigen Zustand übergeht. Der elektrische Widerstand eines entsprechend aufgebauten Leiters geht dadurch gegen Null. Geeignete Materialien sind beispielsweise YBCO (Yttrium-Barium-Kupfer-Oxid) oder BiSCCO (Wismut-Strontium-Kalzium-Kupfer-Oxid). Ausreichend niedrige Temperaturen für ein derartiges Material betragen beispielsweise zwischen 4 K und 110 K, um den supraleitfähigen Zustand zu erreichen. Geeignete Kühlmittel sind beispielsweise Stickstoff, Helium, Neon und Wasserstoff oder Gemische dieser Stoffe, jeweils in gasförmigem oder flüssigem Zustand. Es sind supraleitfähige Kabel mit kaltem Dielektrikum und mit warmem Dielektrikum bekannt.

Bei einem supraleitfähigen Kabel mit kaltem Dielektrikum ist der supraleitfähige Leiter von einem aus Schichten aus Isoliermaterial bestehenden Dielektrikum umgeben, bei dem ein flüssiges Kühlmedium als Imprägniermittel im Dielektrikum vorhanden ist. Ein solches Kabel besteht beispielsweise aus dem Leiter als Innenleiter und einem konzentrisch dazu angeordneten Schirm bzw. Rückleiter, die durch das Dielektrikum (Isolierung) voneinander getrennt und auf Abstand gehalten sind. Ein entsprechendes Kabel ist von einem ein Kühlmittel führenden Kryostat umgeben, der aus zwei konzentrischen, durch eine thermische Isolierung gegeneinander isolierten, metallischen Rohren besteht.

Das eingangs geschilderte Kabel nach der EP 1 717 821 A1 ist ein supraleitfähiges Kabel mit warmem Dielektrikum, bei welchem der supraleitfähige Leiter direkt in einem das Kühlmittel führenden Kryostat angeordnet ist. Das Dielektrikum bzw. die Isolierung und der Schirm, der auch als Rückleiter dienen kann, sind hier über dem Kryostat angebracht. Dieses bekannte Kabel ist außerdem mit einem aus normalleitendem Material, wie Kupfer, bestehenden Normalleiter ausgerüstet, der beispielsweise bei Ausfall der Kühlung bzw. im Kurzschlußfall den Strom führt. Im Falle eines Kurzschlusses wird die eingebrachte Energie über das Kühlmittel abgeführt. Um bei diesem Kabel eine günstige Stromverteilung zu erreichen, sind sowohl für den supraleitfähigen Leiter als auch für den Normalleiter bestimmte Leitergeometrien, insbesondere bestimmte Verseilwinkel, erforderlich.

Der Erfindung liegt die Aufgabe zugrunde, den Aufbau des eingangs geschilderten Kabels zu vereinfachen.

Diese Aufgabe wird gemäß der Erfindung dadurch gelöst, daß der Normalleiter unter Anlage am Kryostat außerhalb desselben angeordnet ist.

Der Normalleiter liegt bei diesem Kabel außerhalb des Kryostats und damit auf Raumtemperatur und somit insbesondere außerhalb des bei Betrieb des Kabels wirksamen Kühlbereichs. Im Kryostat befindet sich nur der supraleitfähige Leiter, für dessen geometrischen Aufbau dadurch ohne Berücksichtigung des Normalleiters mehr Möglichkeiten zur Verfügung stehen. Im Kurzschlußfall eingebrachte Energie belastet außerdem das Kühlsystem innerhalb des Kryostats nicht. Sie wird bei Raumtemperatur außerhalb des Kühlsystems eingebracht und kann mit üblichen Mitteln abgeführt werden.

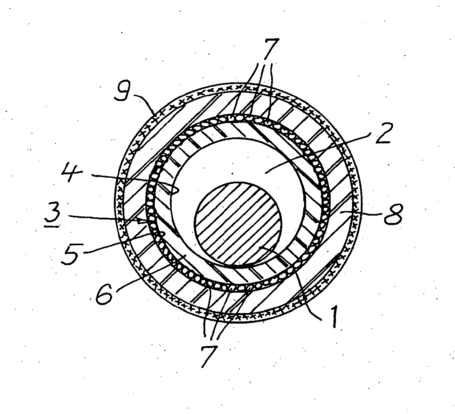

Ein Ausführungsbeispiel des Erfindungsgegenstandes ist in der Zeichnung dargestellt. Die einzige Figur der Zeichnung zeigt einen Querschnitt durch ein Kabel nach der Erfindung.

Das supraleitfähige Kabel ist als einphasiges Kabel ausgeführt. Es hat einen Leiter 1 aus supraleitfähigem Material mit beliebigem Aufbau, der unter Einschluß eines durchgehenden Freiraums 2 in einem Kryostat 3 angeordnet ist. Der Kryostat 3 besteht aus zwei konzentrischen metallischen Rohren 4 und 5, die durch einen Ringraum 6 voneinander getrennt sind, in dem sich eine thermische Isolierung befindet. Durch den Kryostat 3 wird zur Kühlung des supraleitfähigen Leiters 1 ein Kühlmittel geleitet, beispielsweise flüssiger Stickstoff.

Außerhalb des Kryostats 2 ist ein Normalleiter 7 angeordnet, der am Kryostat 3 bzw. an dessen äußerem Rohr 5 anliegt. Er ist sowohl mit dem Leiter 1 als auch mit dem Kryostat 3 elektrisch leitend verbunden, so daß diese Teile auf dem gleichen elektrischen Potential liegen.

Der Normalleiter 7 besteht mit Vorteil aus Kupfer oder Aluminium. Er ist aus einer Vielzahl von Einzeldrähten aufgebaut, die mit Vorteil in mindestens einer Lage über den Umfang des Kryostats 3 verteilt an dessen äußerem Rohr 5 anliegen. Die Einzeldrähte des Normalleiters 7 können entsprechend der zeichnerischen Darstellung einen runden Querschnitt haben. Sie können aber auch rechteckig ausgeführt sein. Die Anzahl der Einzeldrähte des Normalleiters 7 richtet sich nach dessen Querschnitt. Sie müssen nicht gleichmäßig und vollständig um das Rohr 5 des Kryostats 3 herum angeordnet sein. Die Einzeldrähte können auch an zwei oder mehr Stellen des Umfangs des Rohres 5 jeweils mit Abstand angebracht sein.

Über dem Normalleiter 7 ist als Dielektrikum die Isolierung 8 des Kabels angeordnet, die mit Vorteil aus vernetztem Polyethylen besteht. Sie wird um den mit dem Normalleiter 7 bestückten Kryostat 3 herum extrudiert. Die Isolierung 8 ist von einem elektrischen Schirm 9 umgeben. Der Schirm 9 kann als metallisches Rohr ausgeführt sein, das auch quer zu seiner Längsrichtung gewellt sein kann.

## Patentansprüche

1. Supraleitfähiges elektrisches Kabel, das von einem Kryostat umgeben ist, der aus zwei konzentrischen, eine thermische Isolierung zwischen sich einschließenden metallischen Rohren besteht und zur Führung eines Kühlmediums dient, und das mindestens einen aus süpraleitfähigem Material bestehenden Supraleiter sowie einen aus normalleitendem Material bestehenden elektrischen Normalleiter aufweist, der,mit dem Supraleiter elektrisch leitend verbunden ist, **dadurch gekennzeichnet, daß** der Normalleiter (7) unter Anlage am Kryostat (3) außerhalb desselben angeordnet ist.

2. Kabel nach Anspruch 1, **dadurch gekennzeichnet, daß** der Normalleiter (7) aus einer Vielzahl von Einzeldrähten besteht, die über den Umfang des Kryostats (3) verteilt um denselben herum angeordnet sind.

## Claims

1. A superconductive electrical cable, which is surrounded by a cryostat, which consists of two concentric metallic tubes enclosing a thermal insulation between them and which is used to transport a cooling medium, and which superconductive cable has at least one superconductor, which consists of superconductive material, as well as an normal electrical conductor, which consists of normally conductive material and is electrically conductively connected to the superconductor, **characterized in that** the normal conductor (7) is arranged outside of the cryostat (3), abutting to the same.

2. Cable according to claim 1, **characterized in that** the normal conductor (7) comprises a plurality of single wires which surround the cryostat (3) with distribution on its complete peripheral area.

## Revendications

1. Câble électrique supraconducteur, entouré par un cryostat, qui se compose de deux tubes métalliques concentriques renfermant entre eux une isolation thermique et qui sert à guider un réfrigérant, et qui présente au moins un supraconducteur constitué de matériau supraconducteur et un conducteur électrique normal constitué d'un matériau normalement conducteur, qui est connecté de manière électriquement conductrice au supraconducteur, **caractérisé en ce que** le conducteur normal (7) est disposé de manière à s' appliquer contre le cryostat (3) à l'extérieur de celui-ci.

2. Câble selon la revendication 1, **caractérisé en ce que** le conducteur normal (7) se compose d'une pluralité de fils individuels qui sont disposés de manière répartie sur la périphérie du cryostat (3) tout autour de celui-ci.
